# EUROPÄISCHE PATENTSCHRIFT

(11) **EP 1 541 229 B1**
(45) Veröffentlichungstag und Bekanntmachung des Hinweises auf die Patenterteilung: **03.09.2014**
(21) Anmeldenummer: 03028365.9
(22) Anmeldetag: 10.12.2003
(51) Int. Cl.: B01J 19/32, B01J 19/30

(54) **Füllkörper für den Stoff- und Wärmeaustausch**
Packing element for mass and heat exchange
Elément de garnissage pour l'échange de matière et de chaleur

(43) Veröffentlichungstag der Anmeldung: 15.06.2005
(73) Patentinhaber: Vereinigte-Füllkörper-Fabriken GmbH & co. KG, 56235 Ransbach-Baumbach (DE)
(72) Erfinder: Schwämmlein, Kurt, Dr., 55545 Bad Kreuznach (DE)
(74) Vertreter: Quermann, Helmut

(56) Entgegenhaltungen:
- WO-A-02/40148
- DE-C- 335 817
- US-A- 4 575 435
- US-A- 5 112 536
- US-A- 5 200 119
- US-A- 5 543 088
- US-A- 5 882 772

## Beschreibung

Die Erfindung betrifft einen aus Metall bestehenden Füllkörper, insbesondere für Stoff- und/oder Wärmeaustauschkolonnen, die von einer Gas- und/oder Flüssigkeitsströmung durchsetzt werden.

Es ist bekannt, dass Füllkörper verschiedener Ausführungsformen als regellose Schüttungen in Kolonnen, Reaktoren und anderen Behältern für den Stoff- und Wärmeaustausch vielfach eingesetzt werden, wobei thermische, chemische oder physikalische Verfahren wie Absorption, Desorption, Rektifikation, Extraktion und andere Trennprozesse betrieben werden, bei denen verschiedene Phasen bzw. Medien, zum Beispiel gasförmig/flüssig, mit möglichst geringem Aufwand effektiv und innig in Kontakt gebracht werden sollen. Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen. Der Umfang der Benetzung hängt u.a. von den Flüssigkeitseigenschaften, den Füllkörpermaterialeigenschaften, der Berieselungsdichte und von weiteren Faktoren ab. Das Füllkörperbett weist gegenüber der Strömung der Phasen einen bestimmten Druckverlust auf, der vom Gasbelastungsfaktor, der Berieselungsdichte, dem Füllkörpertyp, der Füllkörpergröße und weiteren Parametern abhängig ist.

Bekannt ist weiterhin, dass die Variierung von einem Füllkörper mit geschlossener Oberfläche auf einen Füllkörper, dessen Oberfläche im weitesten Sinne Öffnungen bzw. Durchbrüche aufweist, deutliche Verbesserungen hinsichtlich der Senkung des Druckverlustes über die Füllkörperschüttung ermöglicht, wobei sich durchaus keine nennenswerten Leistungsminderungen bezüglich Stoff- bzw. Wärmeaustausch ergeben müssen. Allerdings muss bei manchen Ausführungsformen bzw. in manchen Fällen besonders auf eine geeignete Vorverteilung der Medien, d.h. in der Regel der Flüssigkeit, durch Auswahl eines geeigneten Flüssigkeitsverteilers, zum Beispiel mit einer geeigneten Anzahl und Verteilung von Tropfstellen, geachtet werden, insbesondere, wenn es sich um größere Kolonnendurchmesser handelt.

In einer regellosen Schüttung werden die Füllkörper und deren meist mit einer gedachten Vorzugsrichtung parallel verlaufenden Füllkörperachsen nach einer technischen Befüllung in der Praxis nahezu regellos nach dem Zufallsprinzip über alle möglichen Ausrichtungen in Bezug zu der Kolonnenachse bzw. Behälterachse verteilt sein, sofern die Füllkörper nicht extrem flach sind und das Nennmaß des betreffenden Füllkörpers entsprechend klein gegenüber dem Kolonnendurchmesser ist. Eine signifikante Bevorzugung der parallelen oder quasi-parallelen Ausrichtung der Füllkörperachse in Bezug zu der Kolonnenachse - welches einer strömungsgünstigen Ausrichtung gegenüber einer regellosen Anordnung entspricht - tritt unter einem praktisch vertretbaren Befüllungsvorgang nicht in nennenswertem Umfange auf.

In diesem Zusammenhang ist eine Vielzahl von im weitesten Sinne aus Streifen aufgebauter Füllkörper bekannt. Diese sind beispielsweise beschrieben in DE-PS 853 159, EP 0 143 902 A1, US 4 575 435, DE-AS 1 129 931, US 4 303 599, DE 295 12 080 U1, EP 0 764 462 B1, US 4 041 113, US 4 576 763, US 5 411 681 und EP 0 697 246 B1. In sinnfälliger Weise lässt sich bei diesen bekannten Ausführungsformen im weitesten Sinne eine Füllkörperachse so definieren, wobei diese senkrecht zu den Normalen auf dem bestimmenden Hauptteil der wesentlichen Oberflächenelemente dieser bekannten Füllkörper steht. Diese wesentlichen Oberflächenelemente können gedanklich als Streifen aufgefasst werden, die im Falle von zum Beispiel Metall als Füllkörperwerkstoff aus einem ehemals ebenen rechteckigen Blechstück mit geeigneten Einschnitten durch Umformvorgänge hervorgegangen sind. Die Streifen haben bekanntlich zwei aufeinander senkrecht stehende Seiten und können entlang ihrer einen Seite - zumeist längsseitig - gebogen bzw. verschiedenartig gekrümmt sein, während die andere Seite - also die zur ersteren senkrecht stehende Seite - immer ein gerades Stück ist bzw. ein gerades Stück mit einer kleinen Nut oder mit einer dazu rechtwinkligen Ansatzfläche wie eine Art Flanschstück jeweils zur mechanischen Verstärkung ist.

Ein weiterer Füllkörper ist aus der WO 02/40148 A2 bekannt. Dieser weist eine polygone Gestalt auf und besitzt mehrere gebogene Streifen.

Allen genannten Füllkörpern, die aus einer Platte erzeugt werden, ist gemeinsam, dass sie zwischen den gebogenen Streifen, senkrecht zur durch die

Querabschnitte gehenden Ebene gesehen, keine Öffnung bzw. keine Öffnungen aufweisen. Bei einer Ausrichtung, bei der der Füllkörper keine Öffnung dem Gasstrom bietet, erzeugt ein großer Anteil der Füllkörperoberfläche eine starke Richtungsänderung des lokalen Gasstroms. Dies ist ungünstig für einen niedrigen Druckverlust. So lassen sich die für einen niedrigen Druckverlust ungünstigen bzw. äußerst ungünstigen Ausrichtungen, beispielsweise bei dem Füllkörper nach der DE-PS 853 159, durch eine Projektion mit gedachtem Licht erkennen, wobei diejenigen zur Füllkörperachse mehr oder weniger senkrechten Füllkörperprojektionsflächen praktisch vollkommen "schwarze" Flächen ergeben und somit den Ausrichtungen mit dem größten Strömungswiderstand entsprechen. Dagegen besteht die Projektionsfläche unter zur Hilfenahme eines gedachten Lichts parallel zur Füllkörperachse bei dem Füllkörper nach diesem Stand der Technik nur aus einem schwarzen Kreis mit einigen nach innen gerichteten gekrümmten Linien. Die Ausrichtung der Füllkörperachse parallel zur lokalen Gasströmungsrichtung ist die strömungsgünstigste Ausrichtung mit dem niedrigsten Druckverlust.

Aufgabe der vorliegenden Erfindung ist es insbesondere, zu einem kostengünstig herstellbaren Füllkörper mit geringem Druckverlust und mit ausreichenden Flüssigkeitsquerverteileigenschaften - jeweils über das ganze Füllkörperbett betrachtet - zu gelangen.

Gelöst wird diese Aufgabe durch einen aus Metall bestehenden Füllkörper, wie er durch die Merkmale des Patentanspruchs 1 definiert ist.

Vorteilhafte Weiterbildungen die im Patentanspruch 1 beschriebenen Lösung ergeben sich aus den Unteransprüchen 2 bis 12.

Der Füllkörper wird aus einer Platte aus Metall erzeugt, womit sich die Platte als Blech darstellt.

Von besonderer Bedeutung ist bei dieser Lösung, dass der Füllkörper mindestens zwei längliche Streifen aufweist, zwischen denen in der definierten Blickrichtung mindestens eine Öffnung gebildet ist. Bei dieser Öffnung kann es sich um einen Spalt handeln. Es können durchaus mehrere Öffnungen vorgesehen sein.

Erzeugt werden kann die Öffnung bzw. können die Öffnungen auf beliebige Art und Weise. Es kann beispielsweise dadurch geschehen, dass die Streifen, bezogen auf deren Querrichtung, zueinander geneigt angeordnet sind. Es reicht aus und wird überdies als vorteilhaft angesehen, wenn die Streifen in Teilbereichen, insbesondere in mehreren Teilbereichen über die Länge der Streifen verteilt, zueinander geneigt angeordnet sind. Durch die Neigung wird die Öffnung zwischen den Streifen gebildet. Es ist ferner denkbar, die Streifen umzuformen bzw. deren Querausrichtung durch Profilierung des Querschnitts zu verändern. Es reicht aus, wenn dieser profilierte Querschnitt in Teilbereichen des Streifens vorgesehen ist. Die Profilierung ist insbesondere U- oder V-förmig. Besteht ein Streifen aus mehreren derartigen Teilbereichen, so entstehen mehrere konkrete Abtropfstellen für die Flüssigkeit, so dass bei jedem Streifen in seiner jeweiligen Lage in einer berieselten regellosen Schüttung mehr Abtropfstellen als nur selbige am tiefsten Punkt bei jedem Streifen vorhanden sind. Auch ist es denkbar, mindestens einen der Streifen mit einer seitlichen Ausstanzung zu versehen, um so, durch das Entfernen des Materials, eine Öffnung zwischen den Streifen zu bilden. Die Ausstanzung kann sich beispielsweise als Zacken in Randbereichen des Streifens oder als im wesentlichen in Querrichtung vorgenommener Einschnitt darstellen, womit bei Anbringung von beispielsweise zwei seitlichen Einschnitten die zwischen diesen erzeugte Teilfläche des Streifens abgeklappt werden kann, um die Öffnung zwischen den Streifen zu bilden.

Es wird als besonders vorteilhaft angesehen, wenn der mindestens eine Streifen, oder aber auch die Streifen, bezogen auf dessen bzw. deren Längsrichtung, Streifenabschnitte unterschiedlichen Querschnitts aufweist bzw. aufweisen. Der mindestens eine Streifen kann mit mindestens einem Durchgangsloch versehen sein. Es ist von Vorteil, wenn dieses Durchgangsloch in einem Bereich größeren Querschnitts des Streifens angebracht ist. Das Durchgangsloch ist bevorzugt von einem Wulst umgeben. Dies ist besonders vorteilhaft für eine hohe mechanische Stabilität sowie ein verbessertes Auslaufverhalten bzw. Abtropfen der Flüssigkeit.

Der jeweilige Streifen kann auf unterschiedliche Art und Weise gebogen sein. Es kann sich um eine Biegung in Art einer stetigen Krümmung handeln, oder aber um eine Biegung in Art einer Knickung. Auch eine Kombination hiervon ist möglich und durchaus vorteilhaft.

Unter dem Aspekt der Optimierung der Austauschfläche des Füllkörpers und dessen Durchströmeigenschaften wird es als besonders vorteilhaft angesehen, wenn der Füllkörper mindestens drei, insbesondere fünf benachbarte Streifen aufweist. Diese Streifen sind, bei besonders einfacher Gestaltung des Füllkörpers, so ausgebogen, dass sie in parallelen Ebenen angeordnet sind. Es ist denkbar und von Vorteil, wenn zumindest einer der äußeren Streifen in Richtung der anderen Außenseite des Füllkörpers eingebogen ist. Durch diese Anordnung lässt sich erreichen, dass der Füllkörper in der Schüttung mit hoher Wahrscheinlichkeit eine gekippte Lage zum benachbarten Füllkörper einnimmt und die Füllkörper selbst sich nicht ineinander verhaken können.

Der Füllkörper selbst kann die unterschiedlichsten Gestaltungen aufweisen. Er kann beispielsweise, bezogen auf die Anordnung der Platte, ein im wesentlichen ebenes Gebilde darstellen. Aus dieser ebenen Platte sind die Streifen ausgebogen.

Die Querabschnitte des Füllkörpers müssen nicht zwangsläufig dessen Endabschnitte darstellen, d.h. sie müssen nicht notwendig die stirnseitigen Begrenzungen des Füllkörpers darstellen. Es ist durchaus denkbar, dass der Füllkörper aus einer Vielzahl in Abstand zueinander angeordneter Querabschnitte besteht, zwischen denen die Streifen ausgebogen sind. Hierdurch wird quasi ein Gebilde erzeugt, das aus mehreren, durchaus einer Vielzahl von Füllkörpern einen Gesamtfüllkörper bildet.

Gemäß einer Weiterbildung der Erfindung wird ein Füllkörper vorgeschlagen, bei dem sich die gebogenen Streifen nicht berühren. Darunter wird verstanden, dass, unter dem Aspekt des Standes der Technik nach der EP 0 764 462 A1, die Streifen so gebogen sind, dass sie sich, aufgrund deren Gegenläufigkeit, sich nicht schneiden und damit auch nicht berühren.

Nachfolgend werden die vorbeschriebenen Einzelheiten der Erfindung im Detail erörtert und um weitere Einzelheiten ergänzt:

In einer bevorzugten Ausgestaltung besteht der Füllkörper aus einer Abfolge von Streifen, somit streifenförmiger Einzelelemente, mit jeweils an beiden Enden vorhandenen, in der Regel (aber nicht darauf beschränkt) rechteckförmigen Querabschnitten bzw. Endabschnitten, die man auch als Verbindungslappen bezeichnen kann. Jeder Verbindungslappen hat noch drei freie Stellen, mit denen er Kontakt bzw. Verbindung zu einer Seite eines Verbindungslappens eines benachbarten Streifens hat. Jeder Streifen ist beispielsweise gebogen, weist Krümmungen mit Eindellungen auf, besitzt Ecken oder Kanten oder ist zickzackförmig gestaltet. Jeder Streifen besteht vorzugsweise aus bestimmten Teilelementen, die sich mehrfach - bevorzugt regelmäßig, aber nicht ausschließlich regelmäßig - in ähnlicher Weise wiederholen. Jedes Teilelement eines Streifens hat zum Beispiel eine Art Dachform oder in allgemeiner Weise eine dreidimensionale Struktur, die sich beispielsweise gedanklich aus einem ebenen Rechteck - mit beliebigen Verhältnissen der zueinander senkrecht stehenden Seitenlängen - erzeugen lässt, indem zum Beispiel eine V-förmige Abknickung bzw. Eindellung entlang einer Linie, die beliebig - bevorzugt jedoch parallel - zu einer der Rechteckseiten ausgerichtet ist. Das Teilelement kann entlang der gesamten Linienlänge V-förmig bzw. ähnlich einer V-Form sein, wobei der Winkel zwischen diesen auch verschiedenen langen Schenkeln der V-Form zwischen 0 und 90°, bevorzugt jedoch zwischen 45 und 60° liegt. Die beiden Schenkel können geradlinig oder gekrümmt sein. An einem oder beiden Enden bei einem solchen Teilelement kann die V-Form aber wieder stetig, d.h. mit Material verbunden, oder unstetig, d.h., wegen eines Einschnittes oder Materialverbund sprunghaft, in ein ebenes oder fast ebenes Flächenendstück übergehen. Dies kann nicht nur an einem oder beiden Enden, sondern auch dazwischen vorgesehen sein. Innerhalb eines Streifens können mehrere derartige Flächenendstücke (von den Teilelementen) vorhanden sein, wodurch für eine Flüssigkeit mehrere konkrete bzw. definierte Abtropfstellen entstehen, so dass in einer berieselten regellosen Schüttung jeder Streifen mehrere Abtropfstellen aufweist und nicht nur eine einzige am tiefsten Punkt jedes Streifens. Das Flächenendstück kann zusätzlich eine Krümmung um eine Achse aufweisen, die senkrecht bzw. nahezu senkrecht zu einer der eben angesprochenen Rechteckseiten ist. Alle Flächenstücke des Teilelements sowie dessen Flächenendstück bzw. -endstücke können auch Öffnungen aufweisen, zum Beispiel halbkreis- oder kreisförmige, rechteckige Löcher mit und ohne Zungen oder andere Formen, zum Beispiel jeweils mit einem kleinen Wulst bzw. Rand oder auch ohne. Insbesondere durch die Löcher mit Wulst sind für eine Flüssigkeit günstige Ablauföffnungen entstanden. Alle Projektionen dieser dreidimensionalen Struktur dieser Teilelemente auf die oben genannten Ursprungsrechteckfläche füllen diese nicht aus, d.h. es sind für eine Strömung stets offene Flächen vorhanden, auch bei der ungünstigsten Ausrichtung.

Die streifenförmigen Einzelelemente haben insbesondere eine dreidimensionale Struktur und entstehen gedanklich durch Aneinanderfügen der oben beschriebenen Teilelemente, die innerhalb eines Einzelelements auch gegeneinander verdrillt sein können.

Die Abfolge von mindestens einem beliebig um eine zur Längsrichtung senkrechten Achse gebogenen bzw. auch eingedellten streifenförmigen Einzelelement ergibt den Gesamt-Füllkörper, wobei die streifenförmigen Einzelelemente beliebig zueinander ausgerichtet sein können und in ihrer Gesamtheit kugelähnliche oder zylinderähnliche Gestalt oder auch eine andere Gestalt als abstrakte äußere Füllkörperform annehmen können, in die bzw. von der die jeweilige Ausführungsform der Erfindung gedanklich gerade noch hineingesteckt bzw. umschlossen werden kann. Auch die Abfolge von mindestens einem solchen streifenförmigen Einzelelement mit mindestens einem in Längsrichtung beliebig gekrümmten Streifen, dessen andere Seite eine gerade Strecke ist (d. h. der Streifen also nicht profiliert ist), ergibt den neuen Füllkörper- im Sinne der Erfindung. Da eine beliebige Anzahl von zum Beispiel solchen streifenförmigen Einzelelementen an einem oder beiden Enden miteinander verbunden sein kann, können sowohl beliebig flache als auch beliebig hohe erfindungsgemäße Füllkörper erzeugt werden. Auch die Ausrichtung der zum Beispiel Dachform der Teilelemente von zwei benachbarten streifenförmigen Einzelelementen kann beliebig sein.

Die vorbeschriebene konkrete Ausführung resultiert in einem unter Betriebsbedingungen druckverlustarmen, gitterförmigen Füllkörper, bei dem auch die strömungsungünstigen Ausrichtungen noch eine Vielzahl von Öffnungen - immer noch in signifikanter Größe und veränderbar durch den Winkel z. B. in der V-Form der Flächen der Teilelemente sowie zumeist eine regelmäßige Abfolge der zur meist schlitzähnlichen Öffnungen zwischen zwei benachbarten streifenähnlichen Einzelelementen in der Projektion - aufweisen, und der dadurch einen signifikanten offenen Projektionsflächenanteil für den nahezu geradlinigen und kürzesten Strömungsdurchgang, d.h. insbesondere für die Gasströmung, durch den erfindungsgemäßen Füllkörper aufweist. Weiterhin entstehen durch die erfindungsgemäße Ausführung der streifenförmigen Einzelelemente eine Vielzahl von Tropfstellen für die Flüssigkeit.

Im Sinne der Erfindung gibt es in leicht nachvollziehbarer Weise eine Vielzahl von unterschiedlichen Ausgestaltungsmöglichkeiten, von denen einige einfacher und andere mit einem höheren Aufwand - d.h. mit mehr Einzelschritten während des Umformungsprozesses, - herstellbar sind, weswegen im folgenden die einfacheren Ausgestaltungsmöglichkeiten beispielhaft erläutert werden, allerdings ohne die Erfindung ausschließlich auf diese zu begrenzen.

Zur Beschreibung einiger erfindungsgemäßer Füllkörper-Ausführungsformen - ohne Beschränkung auf selbige und ohne Beschränkung auf den im folgenden genannten Hilfskörper - lässt sich zum Beispiel als einfachste Hilfskörper ein offener bzw. geschlossener zylinderähnlicher Körper zur Hilfe nehmen, in dem man bzw. mit dem man diese erfindungsgemäßen Ausführungsformen in imaginärer Weise gerade noch hineinstecken bzw. gerade noch umschließen kann. Dieser gedachte zylinderähnliche Körper hat zwei planparallele Stirnflächen, deren Normale parallel zu der gedachten Füllkörperachse dieser erfindungsgemäßen Ausführungsform ist, und eine Mantelfläche, deren Länge der Umfang der Stirnfläche ist und deren Breite eine gerade Linie ist, die parallel zur Füllkörperachse liegt. Die gekrümmte bzw. deformiert kreisförmige Umrandung der Stirnfläche des zylinderähnlichen Körpers kann bzw. hat an zwei Stellen Eindellungen bzw. Einkerbungen, wobei diese noch zueinander geneigt sind. Die erfindungsgemäßen Ausführungsformen berühren nur mit einem geringen Anteil ihrer Gesamtoberfläche die Stirnflächen sowie die Mantelfläche des zylindrischen Hilfskörpers, während der weitaus größere Teil der erfindungsgemäßen Füllkörper-Ausführungsform in das Innere des Hilfskörpers ragt. Die minimale Ausdehnung der erfindungsgemäßen Ausführungsform entlang der Füllkörperachse, die parallel der Zylinderachse des zylinderähnlichen Hilfskörpers ist, stellt die maximale Höhe dar. Zur besseren Veranschaulichung der räumlichen Lage der streifenförmigen Elemente lassen sich gedanklich weiterhin die aufeinanderfolgenden streifenförmigen Einzelelemente in aufeinanderfolgenden flachen Zylinderscheiben (d.h. mit zum Beispiel geringer Höhe im Vergleich zum Durchmesser) unterbringen, wobei die Breite der streifenähnlichen Einzelelemente dann dieser imaginären Zylinderscheibenhöhe entspricht, und die Stimflächennormalen dieser imaginären Zylinderscheiben parallel zur Füllkörperachse ausgerichtet sind. Allerdings können diese Stirnflächennormalen dieser imaginären Zylinderscheibenhöhe auch jeden Winkel zwischen 0° und 90° - bevorzugt zwischen 0° und 30° - mit der Füllkörperachse einschließen, wodurch eine gekippte Lage zwischen zwei streifenförmigen Elementen entsteht.

Die Abfolge dieser streifenförmigen Einzelelemente ist beliebig, bevorzugte, aber nicht darauf beschränkte Abfolgen sind beispielsweise (wobei ein x, y, z-Koordinatensystem hilfsweise verwendet wird, bei dem die Füllkörperachse mit der z-Achse zusammenfällt):
- streifenförmiges Einzelelement zur positiven x-Achse gewölbt, zick-zack-streifenförmiges Einzelelement, streifenförmiges Einzelelement zur negativen x-Achse gewölbt, zick-zack-streifenförmiges Einzelelement, streifenförmiges Einzelelement zur positiven x-Achse gewölbt;
- zick-zack-streifenförmiges Einzelelement, streifenförmiges Einzelelement zur positiven x-Achse gewölbt, streifenförmiges Einzelelement zur negativen x-Achse gewölbt, streifenförmiges Einzelelement zur positiven x-Achse gewölbt, zick-zack-streifenförmiges Einzelelement;
- und andere Abfolgen mit mehr oder weniger streifenförmigen Einzelteilen.

Die einfachste Abfolge in streifenförmige Einzelelemente bei einem Füllkörper mit zwei Streifen ist:
streifenförmiges Einzelelement zur positiven x-Achse gewölbt, zick-zack-streifenförmiges Einzelelement.

Weitere Merkmale der Erfindung sind in der Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren 9 - 25 ist die Erfindung anhand diverser Ausführungsformen dargestellt, ohne hierauf beschränkt zu sein. Die Figuren 1 - 8, 26, 27 betreffen nicht die erfindungsgemäße Ausgestaltung des Füllkörper. Es stellt dar:
- Figur 1: eine Seitenansicht einer ersten Ausführungsform des Füllkörpers, der aus einem Streifen gebildet ist (gemäß der Ansicht A in Figur 2, wobei hierunter grundsätzlich eine Seitenansicht verstanden wird),
- Figur 2: eine Draufsicht des in Figur 1 gezeigten Füllkörpers (in einer Ansicht B gemäß Figur 1, wobei hierunter grundsätzlich eine Draufsicht verstanden wird),
- Figur 3: eine zweite Ausführungsform des Füllkörpers, in einer Seitenansicht,
- Figur 4: den in Figur 3 gezeigten Füllkörper- in einer Draufsicht,
- Figur 5: eine dritte Ausführungsform des Füllkörpers in einer Seitenansicht,
- Figur 6: den in Figur 5 gezeigten Füllkörper- in einer Draufsicht,
- Figur 7: eine vierte Ausführungsform des Füllkörpers in einer Seitenansicht,
- Figur 8: den in Figur 7 gezeigten Füllkörper- in einer Draufsicht,
- Figur 9: den Füllkörper in einer fünften Ausführungsform, gezeigt in einer Seitenansicht,
- Figur 10: den in Figur 9 gezeigten Füllkörper in einer Draufsicht,
- Figur 11: eine sechste Ausführungsform des Füllkörpers, gezeigt in einer Seitenansicht,
- Figur 12: den in Figur 11 gezeigten Füllkörper in einer Draufsicht,
- Figur 13: den Füllkörper in einer siebten Ausführungsform, gezeigt in einer Seitenansicht,
- Figur 14: den in Figur 13 gezeigten Füllkörper in einer Draufsicht,
- Figur 15: den Füllkörper in einer achten Ausführungsform, gezeigt in einer Seitenansicht,
- Figur 16: den in Figur 15 gezeigten Füllkörper in einer Draufsicht,
- Figur 17: den in den Figuren 15 und 16 gezeigten Füllkörper in einer Ansicht gemäß Pfeil C,
- Figur 18: den Füllkörper in einer neunten Ausführungsform, gezeigt in einer Seitenansicht,
- Figur 19: den in Figur 18 gezeigten Füllkörper in einer Draufsicht,
- Figur 20: einen Schnitt durch den in Figur 19 gezeigten Füllkörper gemäß der Linie X-X, veranschaulicht für einen V-förmigen Querschnitt,
- Figur 21: einen Schnitt gemäß Figur 20, veranschaulicht für einen U-förmigen Querschnitt,
- Figur 22: den Füllkörper in einer zehnten Ausführungsform, veranschaulicht in einer Seitenansicht,
- Figur 23: den in Figur 22 gezeigten Füllkörper in einer Draufsicht,
- Figur 24: den Füllkörper in einer elften Ausführungsform, gezeigt in einer Seitenansicht,
- Figur 25: den in Figur 24 gezeigten Füllkörper in einer Draufsicht,
- Figur 26: den Füllkörper in einer zwölften Ausführungsform, gezeigt in einer Seitenansicht,
- Figur 27: den in Figur 26 gezeigten Füllkörper in einer Draufsicht.

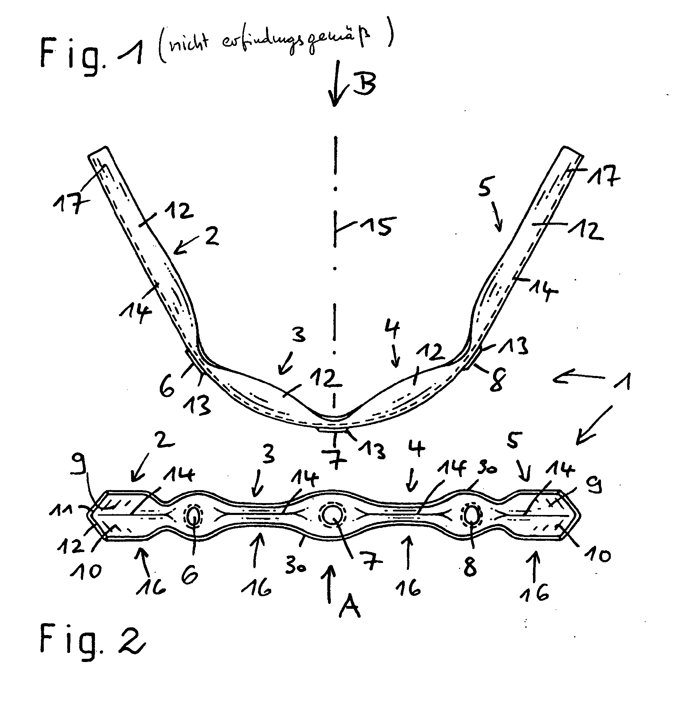

Die nicht erfindungsgemäße Ausführungsform gemäß der Figuren 1 und 2 veranschaulicht die einfachste Gestaltung eines einstreifigen Füllkörpers 1. Dieser wird verwendet für Stoff- und/oder Wärmeaustauschkolonnen, die von einer Gas- und/der Flüssigkeitsströmung durchsetzt werden. Der Füllkörper 1 besteht aus einem einzigen, länglichen, plattenförmigen Streifen, der in Querrichtung eine Profilierung aufweist. Er besitzt konkret über seine Länge mehrere, unterschiedlich profilierte Abschnitte.

Ausgangspunkt für die Bildung des Füllkörpers 1 gemäß der Figuren 1 und 2 ist eine ebene, längliche, rechteckige Platte aus Blech, die zur Erzeugung der Profilierung, über deren Länge unterschiedlich umgeformt wird.

Bei der Ausführungsform nach den Figuren 1 und 2 besteht der Füllkörper 1 aus vier Teilelementen 2, 3, 4 und 5, wobei benachbarte Teilelemente im Bereich von in den Füllkörper 1 eingestanzten oder anderweitig eingebrachten Löchern 6, 7 und 8 aneinander grenzen.

Jedes Teilelement 2 bis 5 besteht aus zwei Teilflächen 9 und 10, die zueinander geneigt sind, in einer V-Form, wobei jeder beliebige Winkel von den beiden Schenkeln 11 und 12 eingenommen werden kann, bevorzugt jedoch zwischen 30 und 60° liegt. Statt der V-Form der Teilflächen kann beispielsweise eine U-Form gebildet sein. Im Bereich der Löcher 6 bis 8 ist der Füllkörper 1 im wesentlichen eben ausgebildet bzw. kann auch etwas gekrümmt sein. Der Füllkörper 1 stellt sich, bezogen auf seine Seitenansicht gemäß Figur 1, als im wesentlichen U-förmig gestalteter Körper dar, dessen freie Schenkel, in Richtung der Schenkelenden gesehen, allerdings voneinander weg weisen.

Das jeweilige Loch 6, 7 bzw. 8 ist beim Füllkörper 1 von einem Wulst 13 umgeben.

Die neutrale Biegelinie des Füllkörpers 1 ist in der Figur 1 strichliert dargestellt und mit der Bezugsziffer 14 versehen. In der Figur 2 sind die entsprechenden Linienabschnitte 14 verdeutlicht. Die Figuren 1 und 2 veranschaulichen, dass der Füllkörper 1 bezüglich der Biegelinie 14 sowie auch der eingezeichneten Mittelachse 15 symmetrisch ist.

Die Profilierungen des Füllkörpers 1 sind mit den Bezugsziffern 16 bezeichnet. Bei dieser Ausführungsform ist die Besonderheit zu verzeichnen, dass die Teilelemente 2 und 5 länger sind als die Teilelemente 3 und 4. Dies ist unter dem Aspekt der Ausbildung anderer, nachstehender Füllkörper zu sehen, die mindestens durch zwei Streifen im Sinne des Füllkörpers zur Ausführungsform nach den Figuren 1 und 2 gebildet sind, wobei die Endbereiche 17 der Teilelemente 2 und 5 für diesen Fall der Füllkörper endständige Verbindungslappen zum Verbinden zweier Streifen darstellen.

In der Austauschkolonnen werden eine Vielzahl von Füllkörpern 1 als Schüttgut angeordnet, die somit regellos vorliegen. Aufgrund der Profilierungen 16 des jeweiligen Füllkörpers 1 ist sichergestellt, dass zwischen benachbarten Füllkörpern 1 immer eine Öffnung für den Durchtritt von Gas bzw. Flüssigkeit verbleibt, unabhängig in welcher Position sich die Füllkörper zueinander befinden.

Dieser grundsätzliche Aufbau des Füllkörpers 1, der für die Ausführungsform nach den Figuren 1 und 2 für einen einstreifigen Füllkörper 1 beschrieben ist, ist einer Vielzahl von Modifizierungen zugänglich. Insofern gelten nachfolgende Ausführungen auch für die Streifen der nachstehend erörterten anderen Ausführungsformen des Füllkörpers.

So können beliebig viele Teilelemente, somit nicht nur die zuvor beschriebenen Teilelemente 2 bis 5, pro Streifen vorgesehen sein, wobei die aufeinanderfolgenden Teilelemente in ihrer gegenseitigen Ausrichtung sowie tatsächlichen geometrischen, dreidimensionalen Struktur voneinander beliebig abweichen können oder auch gleich sein können. Jedes Teilelement besteht aus mindestens zwei Teilflächen, die zueinander geneigt oder durchaus auch eben sind, dann sind an den entsprechenden Übergangsstellen Einschnitte oder starke Knicke gemäß einem sprunghaften Übergang vorteilhaft, oder sind Krümmungen vorgesehen, die den Übergang zwischen Teilflächen in stetiger Weise ohne Einschnitt ermöglichen. Die Teilflächen können eben oder beliebig gekrümmt sein. In allen Teilflächen können Öffnungen beliebiger Größe und Form mit bzw. ohne zungenförmige Materialausbiegungen vor bzw. hinter der Öffnung oder auch gar keine Öffnungen enthalten sein. Diese Öffnungen können mit bzw. ohne Wulst ausgeführt sein.

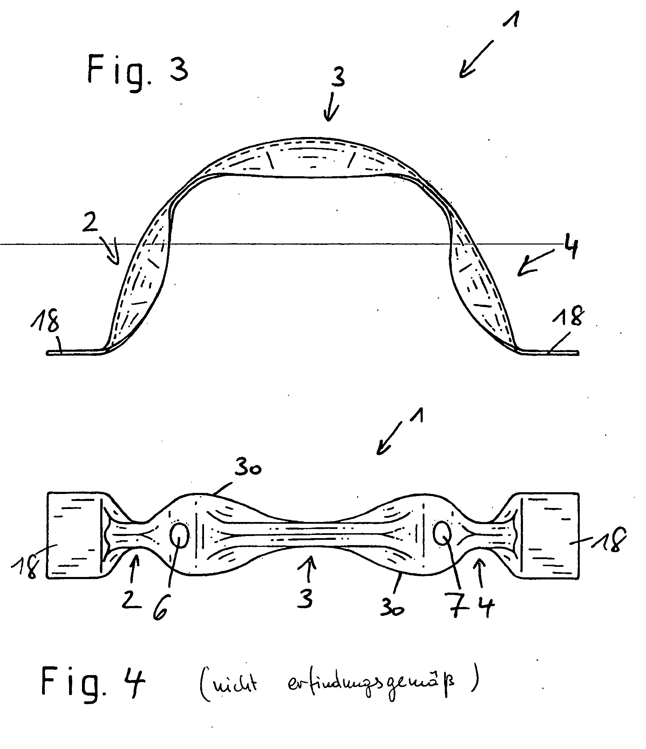

Der Füllkörper 1, d.h. das streifenförmige Einzelelement, kann gerade oder beliebig gekrümmt sein, zum Beispiel annähernd halbkreisförmig, wie es zur nicht erfindungsgemäßen Ausführungsform nach den Figuren 3 und 4 veranschaulicht ist. Es sind drei Teilelemente 2, 3 und 4 vorgesehen, wobei die Teilelemente 2 und 4 in ebene, bezüglich der Teilelemente 2 und 4 abgewinkelt angeordnete Endbereiche 18 münden, die, bezogen auf nachfolgend zu besprechende Ausführungsformen, die Funktion von endständigen Verbindungslappen haben.

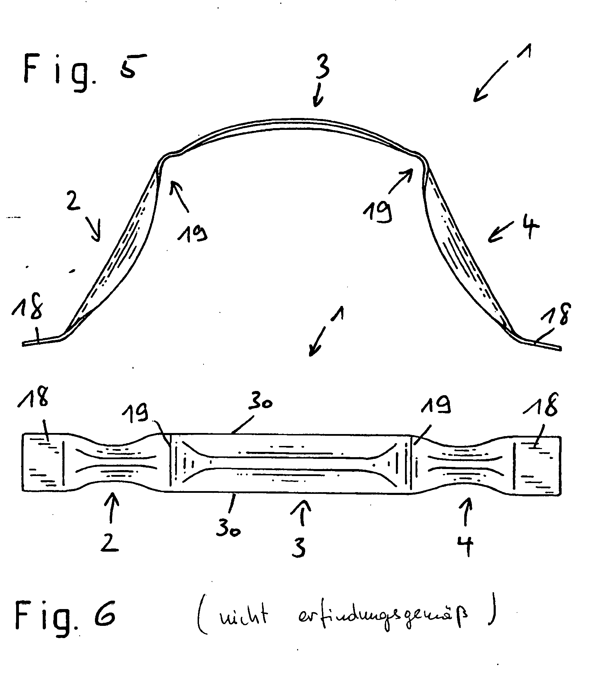

Der Füllkörper 1 gemäß der nicht erfindungsgemäßen Ausführungsform nach den Figuren 5 und 6 weist, im Unterschied zu der Ausführungsform nach den Figuren 3 und 4, zwei stärker abgewinkelte Knickbereiche 19 auf, wobei das mittlere Teilelement 3, bezogen auf dessen Querschnitt, wesentlich flacher, somit nicht so stark abgewinkelt ist wie die angrenzenden Teilelemente 2 und 4. Auch bei dieser Ausführungsform sind ebene Endbereiche 18 vorgesehen.

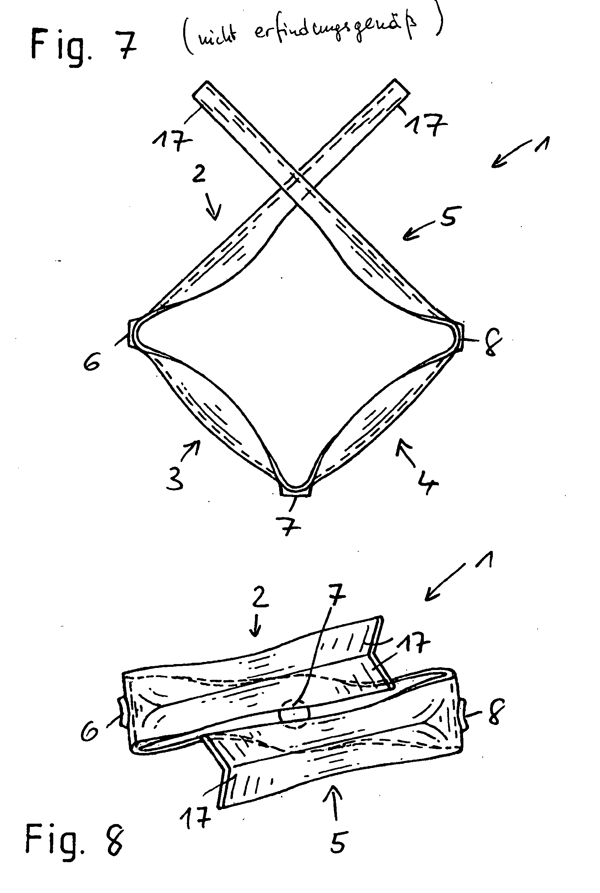

Die nicht erfindungsgemäße Ausführungsform nach den Figuren 7 und 8 unterscheidet sich von derjenigen nach den Figuren 1 und 2 dadurch, dass der aus dem einzigen streifenförmigen Einzelelement bestehende Füllkörper 1 zwischen den einzelnen Teilelementen 2 und 3 einerseits und den Teilelementen 4 und 5 andererseits um nahezu 90° geknickt ist, wobei sich die Teilelemente 2 und 5 überlappen und hierbei gegebenenfalls berühren.

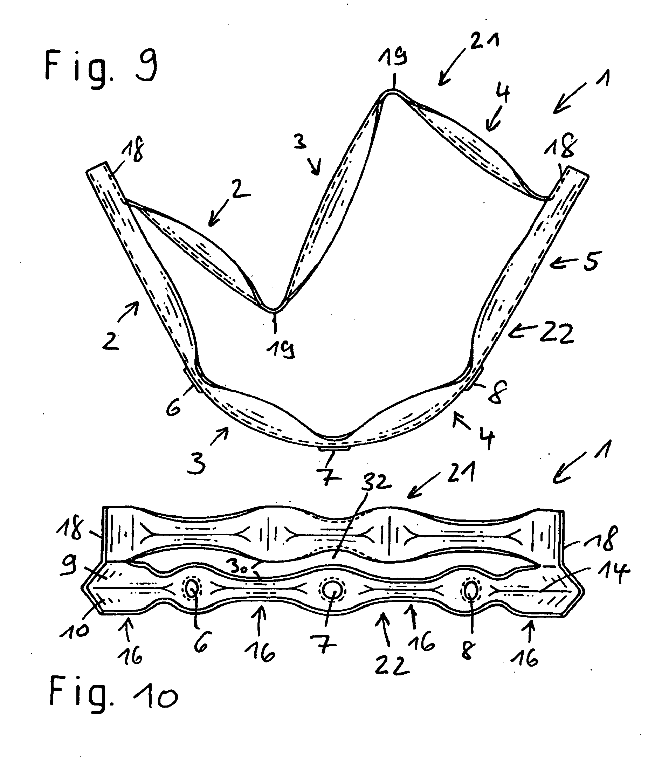

In den Figuren 9 und 10 ist eine Ausführungsform beschrieben, bei der der Füllkörper 1 aus zwei Streifen 21 und 22 gebildet ist, die durch gedankliches Zusammenfügen des Füllkörpers 1 mit dem einen Streifen gemäß der Darstellung nach den Figuren 1 und 2 im Sinne des Streifens 22 mit einem anderen Streifen 21, der anders abgeknickt ist, entsteht. Diese beiden Streifen 21 und 22 sind im Bereich der Endbereiche 18 miteinander verbunden. Zwischen den beiden Streifen 21 und 22 ist, senkrecht zur durch die Querabschnitte 18 gehenden Ebene gesehen, die parallel zur Zeichenebene gemäß Figur 10 verläuft, eine Öffnung 32 (hier: spaltähnlich, jedoch nicht darauf beschränkt) gebildet. Diese ist auch bei allen nachfolgend beschriebenen Ausführungsformen vorhanden.

Die technische Produktion des Füllkörpers gemäß der Ausführungsform nach den Figuren 9 und 10, geht von einem Metallband mit entsprechender Breite und Wandstärke (die wegen der mechanischen Stabilität der Teilelemente auch sehr dünn gewählt werden kann, welches Gewichtsersparungen bedeutet) aus, das in ein Rechteck entsprechender Länge mit entsprechendem Einschnitt zerschnitten wird. Anschließend erfolgen mehrere einfache Umformvorgänge (auch für andere Ausgestaltungen des erfindungsgemäßen Füllkörpers), um den dreidimensionalen Füllkörper zu erhalten, der vorzugsweise aus mehreren, manchmal im Wechsel vor bzw. hinter die ehemaligen Rechteckebene gekrümmten streifenförmigen Einzelelementen, vorliegend den Streifen 21 und 22 besteht, jedoch, wie nachfolgend anhand der weiteren Ausführungsformen beschrieben wird, hierauf keinesfalls beschränkt ist.

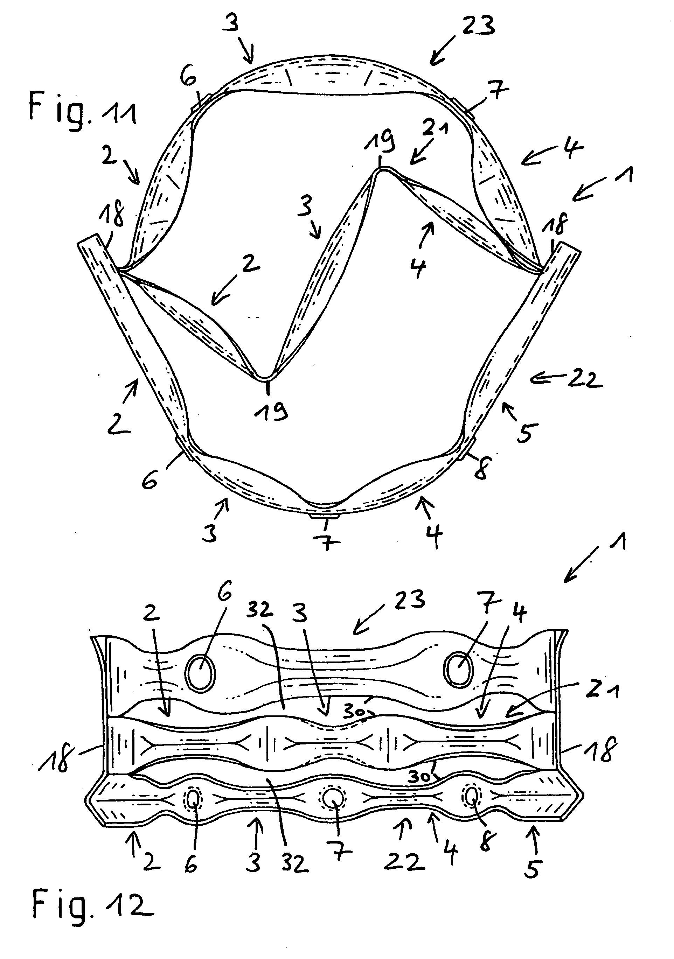

Wie der Ausführungsform nach den Figuren 11 und 12 zu entnehmen ist, ist der Füllkörper, im Unterschied zu der Ausführungsform nach den Figuren 9 und 10, statt aus zwei Streifen nunmehr aus drei Streifen gebildet, die im Bereich deren Endbereichen 18 miteinander verbunden sind. Die Ausführungsform nach den Figuren 11 und 12 weist Streifen 21 und 22 auf, die im Aufbau und deren Anordnung demjenigen der Ausführungsform nach den Figuren 9 und 10 entsprechen. Der Streifen 22 ist entsprechend demjenigen gemäß der Variante, der in den Figuren 1 und 2 veranschaulicht ist, gestaltet. Er weist Löcher 6, 7 und 8 auf. Der Streifen 21 hingegen ist mit keinem Loch versehen und zick-zack-förmig gestaltet, somit ausgehend von einem Teilelement 2 mit Endbereich 18, das schräg nach unten gerichtet ist, zu einem Teilelement 3, das im wesentlichen im nahezu rechten Winkel zu dem Teilelement 2 angeordnet und nach oben gerichtet ist, zu einem Teilelement 4, das im wesentlichen im nahezu rechten Winkel zum Teilelement 3, leicht nach unten gerichtet ist, wobei das Teilelement 4 im Bereich eines weiteren Endbereiches 18 mit dem entsprechenden Endbereich 18 des Streifens 22 verbunden ist, der auch als zusammenhängender Endbereich 18 bezeichnet werden kann. Im Unterschied zu der Ausführungsform nach den Figuren 9 und 10 weist der Füllkörper 1 nach der Ausführungsform gemäß der Figuren 11 und 12 auf der dem Streifen 22 abgewandten Seite des Streifens 21 einen mit diesem verbundenen dritten Streifen 23 auf. Dieser Streifen 23 ist, im Unterschied zu dem nach unten gewölbten Streifen 22, nach oben gewölbt angeordnet und entspricht hinsichtlich seines Aufbaus und seiner Gestaltung im wesentlichen dem Streifen des Füllkörpers gemäß der Ausführungsform nach der Figur 3. Allerdings sind bei dem Streifen 23 die Endbereiche 18 stärker umgebogen, entsprechend der Ausrichtung der Endbereiche 18 des Streifens 22. Der aus den drei Teilelementen 2, 3 und 4 bestehende Streifen 23 weist im Übergangsbereich der Teilelemente allerdings Löcher 6 und 7 auf, die von einem Wulst umgeben sein können.

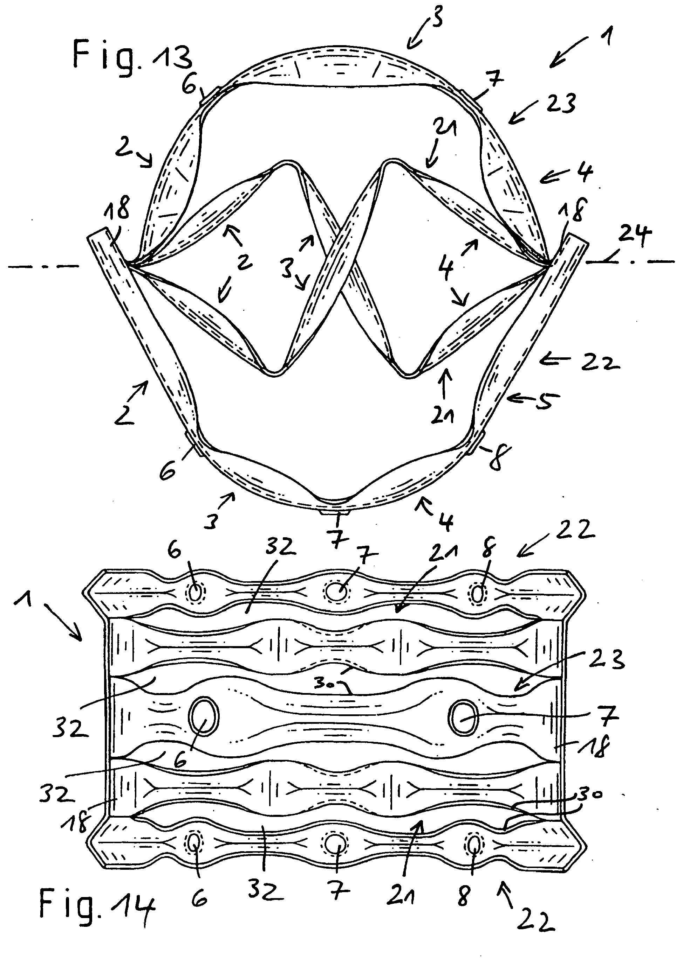

Die Figuren 13 und 14 veranschaulichen eine Ausführungsform eines Füllkörpers 1, der zwar aus fünf Streifen besteht, die allerdings, bezogen auf deren Gestaltung und Aufbau, derjenigen nach der Ausführungsform gemäß der Figuren 11 und 12, somit den Streifen 21, 22 und 23 entspricht. Bei der Ausführungsform nach den Figuren 13 und 14 sind zwei äußere Streifen 22 vorgesehen, innen an diese angrenzend und mit diesen verbunden, zwei Streifen 21 und innen und an diese angrenzend ein mittlerer Streifen 23. Die Orientierung der Streifen 22 bzw. 23 gemäß der Ausführungsform nach den Figuren 13 und 14 entspricht der Orientierung der Streifen 22 bzw. 23 gemäß der Ausführungsform nach den Figuren 11 und 12. Einer der Streifen 21 gemäß der Ausführungsform nach den Figuren 13 und 14 entspricht in seiner Orientierung dem Streifen 21 gemäß der Ausführungsform nach den Figuren 11 und 12, während der andere Streifen 21 der Ausführungsform nach den Figuren 13 und 14 um 180° um die Achse 24 bezüglich des anderen Streifens 21 gedreht ist.

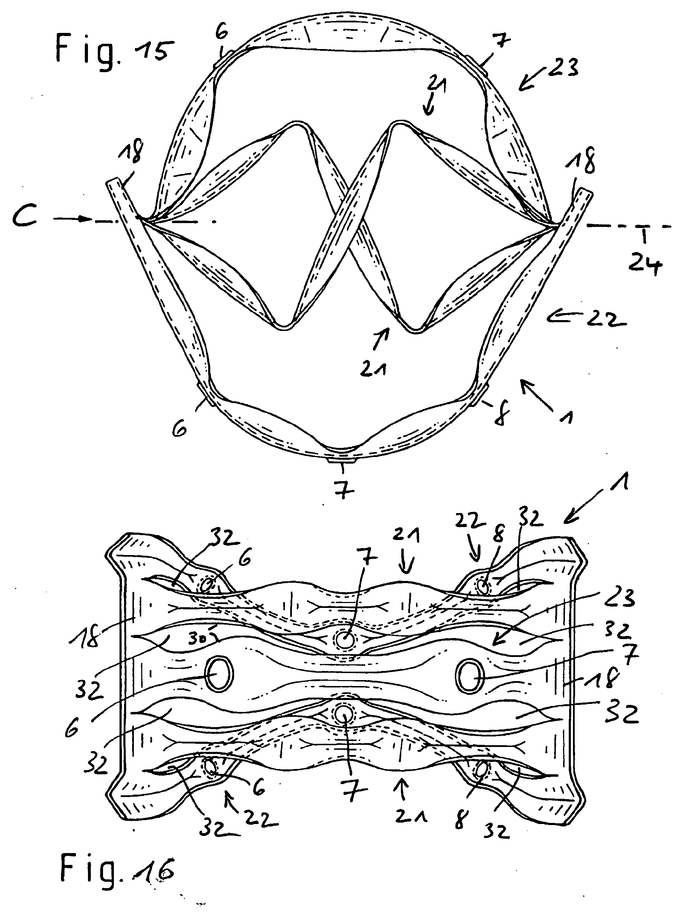

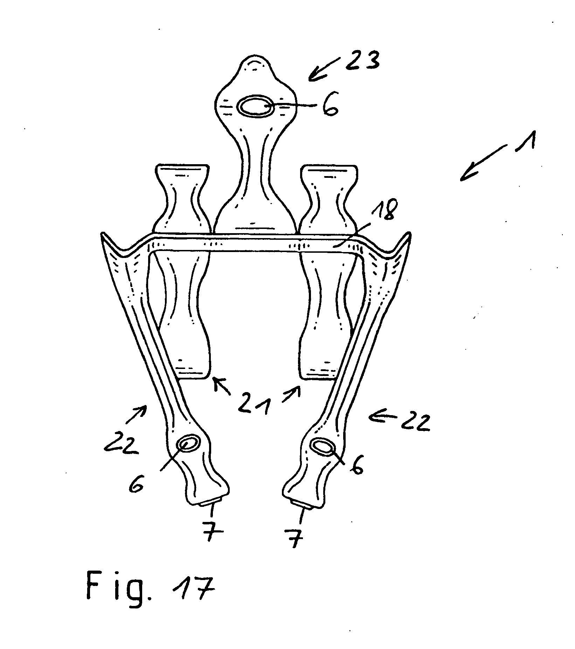

Die Ausführungsform nach den Figuren 15 bis 17 unterscheidet sich von derjenigen nach den Figuren 13 und 14 dadurch, dass, ausgehend von dem entsprechend der Ausführungsform nach den Figuren 13 und 14 gebildeten Füllkörper 1, dessen beide äußeren Streifen 22 um einen Winkel um die Achse 24 gekippt sind, so dass die beiden äußeren Streifen 22 nicht parallel zueinander verlaufen und die Löcher 7 dieser beiden Streifen 22 näher liegen als bei der Ausführungsform nach den Figuren 13 und 14. Der Gestaltung des Füllkörpers 1 mit den zueinander geneigt angeordneten äußeren Streifen 22 hat den Vorteil, dass der Füllkörper praktisch aus allen Richtungen immer in eine sehr strömungsgünstige Position fällt und nicht ineinander verhaken können. Denkbar ist weiterhin, dass nur einer der beiden Streifen 22 um einen Winkel um die Achse 24 gekippt ist.

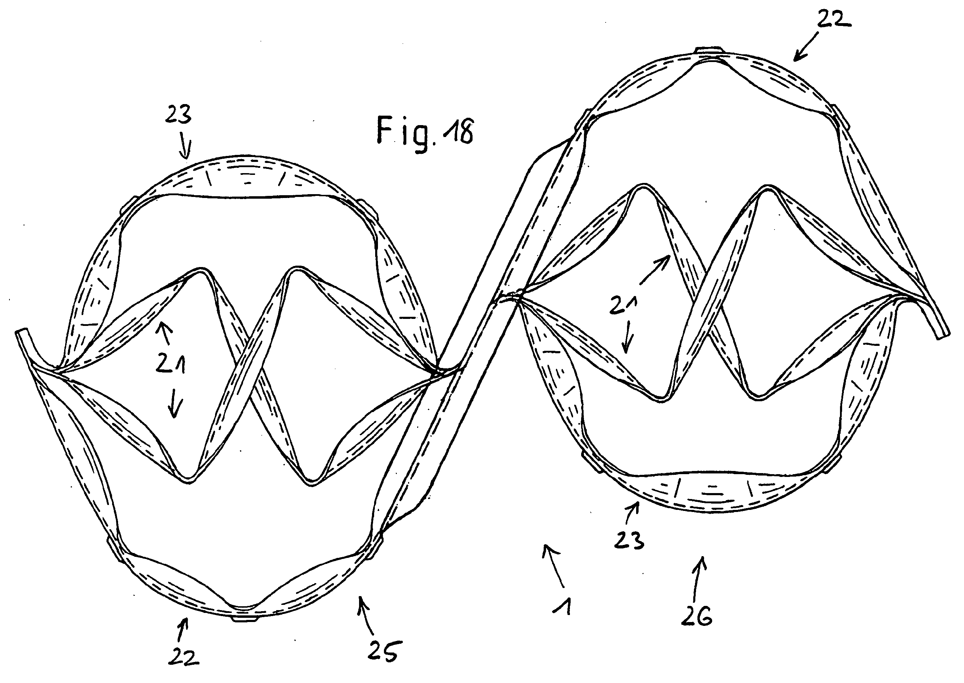

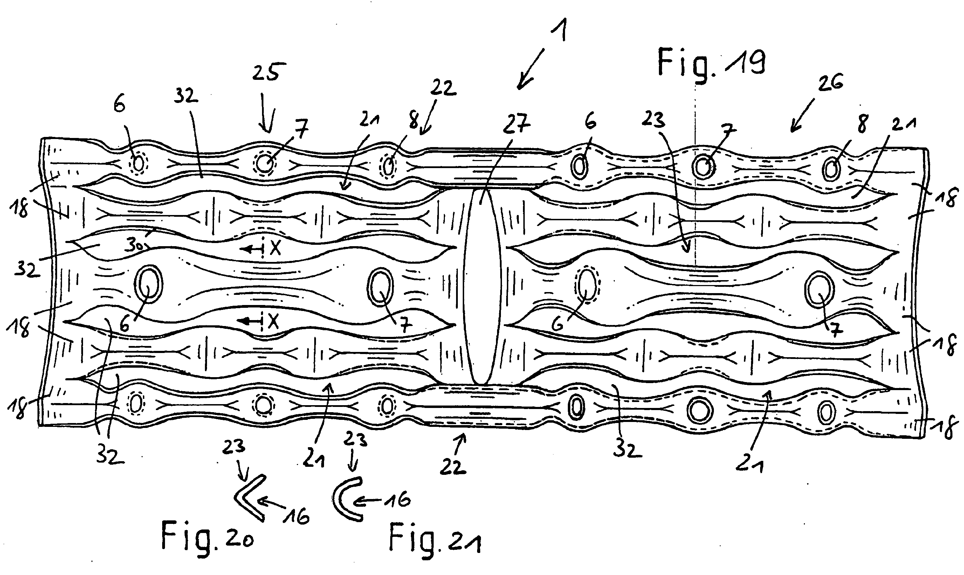

Die Figuren 18 und 19 zeigen eine weitere Ausführungsform des Füllkörpers 1, der durch Bildung zweier Füllkörper gemäß der Ausführungsform nach den Figuren 13 und 14 gebildet ist, die um 180° bezüglich der Achse 24 gedreht angeordnet miteinander im Bereich deren zugewandten Endbereichen 18 miteinander verbunden sind. Selbstverständlich wird der Füllkörper gemäß der Ausführungsform der Figuren 18 und 19 aus einem Metallband im zuvor beschriebenen Sinne gefertigt, und nicht durch Verbinden zweier separater Füllkörper gemäß der Ausführungsform nach den Figuren 13 und 14 gebildet. Allerdings weist der Füllkörper in seinem zentralen Bereich, zwischen den beiden Streifen 21 und dem dazwischen befindlichen Streifen 23 der jeweiligen Füllkörperhälfte 25 bzw. 26 eine Öffnung 27 auf, die z. B. als breiter, ovaler Schlitz ausgebildet ist. Der Füllkörper 1 ist somit nur im Bereich seiner äußeren Streifen 22 in Längsrichtung durchgängig. Der Durchgang der beiden äußeren Streifen 22 über die gesamte Länge des Füllkörpers 1, der steife z. B. V-förmige Mittelbereich und die Verbindung der einzelnen Streifen im Bereich deren Endbereichen 18 bedingt die erforderliche Stabilität des Füllkörpers 1, insbesondere gegen unerwünschtes Verbiegen.

Die Schnittführung X-X in Figur 19 und die entsprechende Darstellung gemäß der Figuren 20 und 21 soll verdeutlichen, dass die einzelnen Streifen unterschiedlichen Querschnitt, insbesondere einen V-förmigen Querschnitt gemäß Figur 20 bzw. einen U-förmigen Querschnitt gemäß der Darstellung nach der Figur 21 aufweisen können. Dieser Querschnitt ist für den mittleren Streifen 23 verdeutlicht, kann aber durchaus auch bei den anderen Streifen 21, 22 verifiziert sein. Es sind auch andere Streifenabfolgen als 22, 21, 23, 21 22 denkbar.

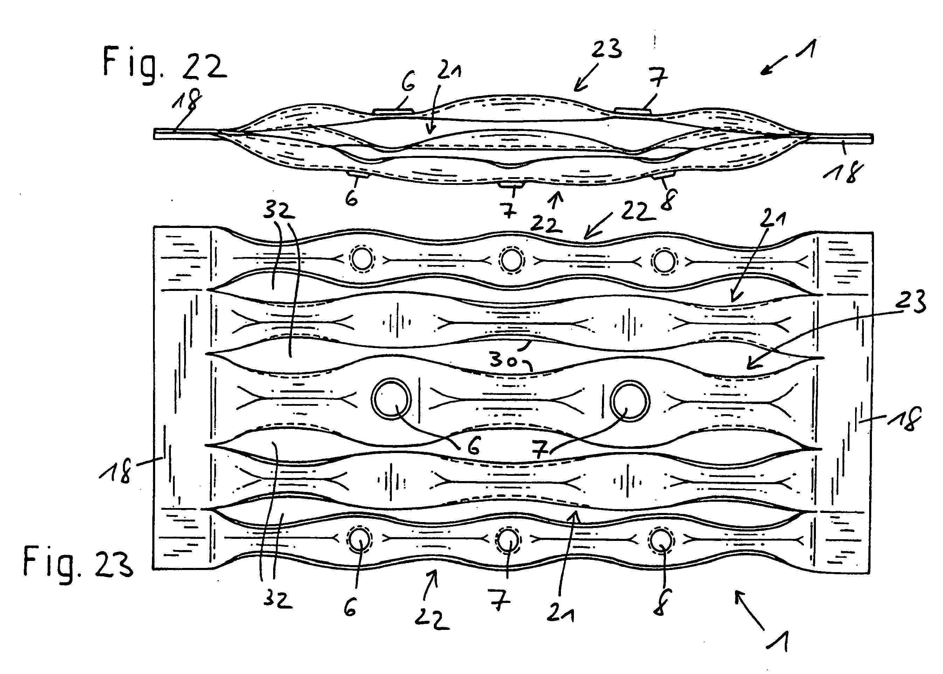

Die Ausführungsform nach den Figuren 22 und 23 stellt einen Füllkörper 1 dar, der z. B. eine Vorstufe der Herstellung des Füllkörpers 1 gemäß der Ausführungsform nach den Figuren 13 und 14 sein kann. Der Füllkörper nach der Ausführungsform gemäß den Figuren 22 und 23 hat die fünf miteinander verbundenen Streifen 22, 21, 23, 21, 22, die entsprechend der Ausführungsform nach den Figuren 13 und 14 profiliert sind, allerdings sind diese Streifen nicht weit nach unten, oben, bzw. zick-zack-förmig gebogen, sondern es stellt sich der Füllkörper 1 als relativ flaches Element dar, bei dem die einzelnen Streifen, insbesondere die äußeren Streifen 22 und der innere Streifen 23 nur geringfügig aus der durch die Endbereiche 18 gebildeten Ebene ausgebogen sind.

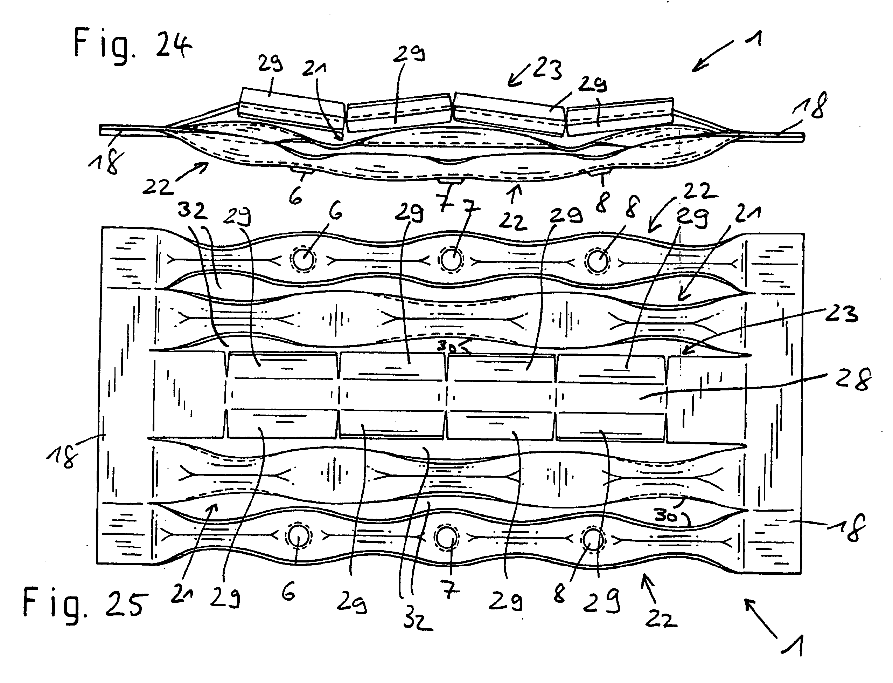

Die Ausführungsform nach den Figuren 24 und 25 unterscheidet sich von derjenigen nach den Figuren 22 und 23 im wesentlichen dadurch, dass der innere Streifen 23 eine andere Gestalt aufweist. Dort ist keine U- oder V-förmige Profilierung vorgesehen, sondern es ist der Streifen 23, bezogen auf seine Länge, mehrfach quer eingeschnitten, so dass sich ein durchgehender mittlerer Streifenabschnitt 28 und seitliche Streifenlappen 29 ergeben. Diese Lappen 29 sind geringfügig aus der Ebene des Streifenabschnitts 28 geschwenkt, bezogen auf benachbarte Lappen entweder gleichsinnig oder gegensinnig. Die Neigung der Lappen 29 relativ zum Streifenabschnitt 28 kann unterschiedlich sein.

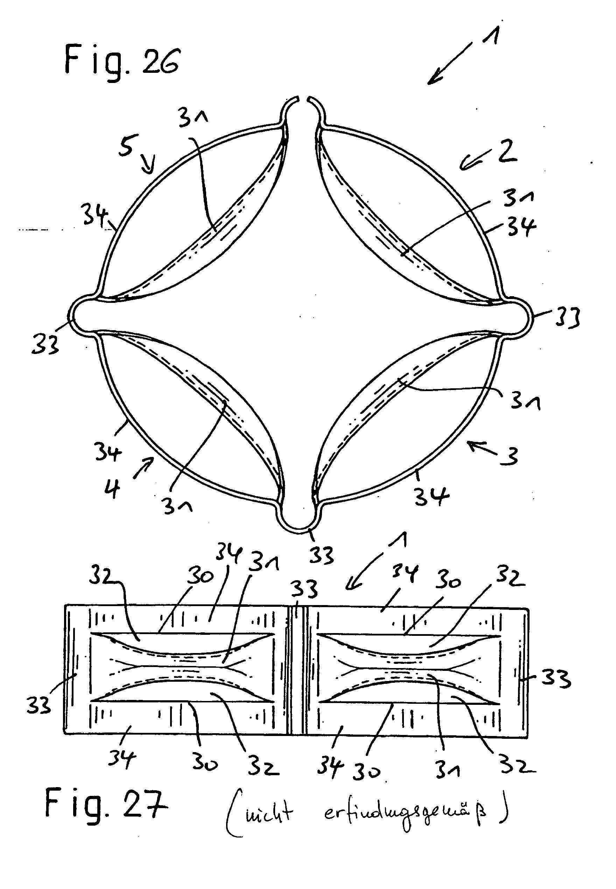

Die Figuren 26 und 27 zeigen eine nicht erfindungsgemäße modifizierte Ausführungsform eines Füllkörpers 1. Bei diesen ist der längliche, schmale Ausgangsblechstreifen mit vier Paar paralleler Einschnitte 30 versehen. Der jeweilige Streifen 31, der einem Paar von Einschnitten 30 zugeordnet ist, ist quer zur Längserstreckung des Blechstreifens gequetscht, womit sich eine im Querschnitt V- bzw. U-förmige Einschnürung ergibt, so dass zwischen dem Streifen 31, in seinem eingeschnürten Bereich, und dem jeweiligen Einschnitt 30 die Öffnung 32 gebildet ist. Insgesamt sind bei dem Füllkörper 1 vier Teilelemente 2 bis 5 gebildet, die rotationssymmetrisch angeordnet sind. Zwischen den Teilelementen können U-förmige Profilierungen 33, quer zur Längserstreckung des Blechstreifens, vorgesehen sein. Die vierte Profilierung des Vollkreises des Füllkörpers 1 kann im Bereich der zusammengeführten Enden des Blechstreifens gebildet sein, dort wo der Füllkörper 1 geöffnet ist. Demzufolge stellt sich der Füllkörper 1, im Querschnitt betrachtet, mit seinen vier Streifen 31 als quasi Quadrat dar, während die außen an die Streifen 31 angrenzenden Streifen 34 auf einem Kreis zu liegen kommen.

Allen vorgenannten Ausführungsformen ist gemeinsam, dass zwischen den gebogenen Streifen, senkrecht zur durch die Querschnitte gehenden Ebene mindestens eine Öffnung 32 gebildet ist. Diese kann durch eine Profilierung des Querschnitts oder eine Ausstanzung erzielt werden. Die Streifen berühren sich nicht, d.h., beispielsweise auf die Ausführungsform nach den Figuren 13 und 14 bezogen, berührt der äußere Streifen 22 nicht den zu diesem benachbarten inneren Streifen 21 und dieser nicht den zu diesem benachbarten inneren Streifen 23, abgesehen von der Verbindung der Streifen im Bereich der die Streifen verbindenden Endbereiche 18.

## Patentansprüche

1. Aus Metall bestehender Füllkörper (1), insbesondere für Stoff- und/oder Wärmeaustauschkolonnen, die von einer Gas- und/oder Flüssigkeitsströmung durchsetzt werden, wobei der Füllkörper (1) aus einer Platte erzeugt ist, und mindestens einen Einschnitt (30) in der Platte zur Bildung zweier länglicher Streifen (22, 21; 21, 23; 31, 34) zwischen Querabschnitten (17, 18, 33) der Platte vorgesehen sind, sowie die Streifen zwischen diesen Querabschnitten aus der durch die Querabschnitte gehenden Ebene gebogen sind, **dadurch gekennzeichnet, dass** zwischen den gebogenen Streifen (22, 21; 21, 23; 31, 34), senkrecht zur durch die Querabschnitte (17, 18, 33) gehenden Ebene gesehen, mindestens eine Öffnung (32) gebildet ist, sowie mindestens ein Streifen (22, 21; 21, 23; 31, 34), bezogen auf dessen Querrichtung, zur Bildung der Öffnung (32) einen profilierten Querschnitt aufweist und/oder zur Bildung der Öffnung (32) eine seitliche Ausstanzung aufweist und/oder zur Bildung der Öffnung (32) die Streifen (22, 21; 21, 23; 31, 34) zumindest in Teilbereichen, bezogen auf deren Querrichtung, zueinander geneigt angeordnet sind.

2. Füllkörper nach Anspruch 1, **dadurch gekennzeichnet, dass** mindestens ein Streifen (22, 21; 21, 23; 31, 34), bezogen auf dessen Querrichtung, einen U- oder V-förmigen Querschnitt aufweist.

3. Füllkörper nach Anspruch 1 oder 2, **dadurch gekennzeichnet, dass** mindestens ein Streifen (22, 21; 21, 23; 31, 34), bezogen auf dessen Längsrichtung, Streifenabschnitte (2, 3, 4, 5, 28) unterschiedlichen Querschnitts aufweist.

4. Füllkörper nach einem der Ansprüche 1 bis 3, **dadurch gekennzeichnet, dass** mindestens ein Streifen (22, 21; 21, 23; 31, 34) mit mindestens einem Durchgangsloch (6, 7, 8) versehen ist, insbesondere in einem Bereich größeren Querschnitts.

5. Füllkörper nach Anspruch 4, **dadurch gekennzeichnet, dass** das Durchgangsloch (6, 7, 8) mit einem Wulst (13) versehen ist.

6. Füllkörper nach einem der Ansprüche 1 bis 5, **dadurch gekennzeichnet, dass** die Biegung des mindestens einen Streifens (21, 22, 23, 31, 34) als Knick ausgebildet ist.

7. Füllkörper nach einem der Ansprüche 1 bis 6, **dadurch gekennzeichnet, dass** der jeweilige Querabschnitt (17, 18, 33) eben oder gewölbt, insbesondere V-förmig oder U-förmig ist.

8. Füllkörper nach einem der Ansprüche 1 bis 7, **dadurch gekennzeichnet, dass** er eine gitterähnliche Struktur aufweist.

9. Füllkörper nach einem der Ansprüche 1 bis 8, **dadurch gekennzeichnet, dass** er mindestens drei Streifen (22, 21, 23; 34, 31, 34), insbesondere fünf Streifen (22, 21, 23, 21, 22) aufweist.

10. Füllkörper nach einem der Ansprüche 1 bis 9, **dadurch gekennzeichnet, dass** zumindest einer der äußeren Streifen (22) in Richtung der anderen Außenseite des Füllkörpers (1) eingebogen ist, insbesondere bei einem Füllkörper (1) mit drei Streifen oder bei einem Füllkörper mit fünf Streifen, die beiden äußeren Streifen (22, 22) zur Mitte des Füllkörpers (1) eingebogen sind.

11. Füllkörper nach einem der Ansprüche 1 bis 10, **dadurch gekennzeichnet, dass** die Querabschnitte Endabschnitte (17, 18) des Füllkörpers bilden.

12. Füllkörper nach einem der Ansprüche 1 bis 11, **dadurch gekennzeichnet, dass** sich die gebogenen Streifen (21, 22, 23; 31, 34) nicht berühren.

## Claims

1. Packing element (1) consisting of metal, in particular for mass and/or heat exchange columns through which a gas flow and/or liquid flow pass/passes, the packing element (1) being produced from a plate, and at least one indentation (30) in the plate being provided so as to form two elongate strips (22, 21; 21, 23; 31, 34) between transverse portions (17, 18, 33) of the plate and the strips between these transverse portions being bent out of the plane passing through the transverse portions, **characterized in that** at least one orifice (32) is formed between the bent strips (22, 21; 21, 23; 31, 34), as seen perpendicularly to the plane passing through the transverse portions (17, 18, 33), and at least one strip (22, 21; 21, 23; 31, 34) has, in relation to its transverse direction, a profiled cross section for forming the orifice (32) and/or has a lateral punched-out portion to form the orifice (32) and/or, to form the orifice (32), the strips (22, 21; 21, 23; 31, 34) are arranged, at least in subregions, so as to be inclined towards one another in relation to their transverse direction.

2. Packing element according to Claim 1, **characterized in that** at least one strip (22, 21; 21, 23; 31, 34) has a U-shaped or V-shaped cross section in relation to its transverse direction.

3. Packing element according to Claim 1 or 2, **characterized in that** at least one strip (22, 21; 21, 23; 31, 34) has strip portions (2, 3, 4, 5, 28) of different cross section in relation to its longitudinal direction.

4. Packing element according to one of Claims 1 to 3, **characterized in that** at least one strip (22, 21; 21, 23; 31, 34) is provided with at least one through-hole (6, 7, 8), particularly in a region of larger cross section.

5. Packing element according to Claim 4, **characterized in that** the through-hole (6, 7, 8) is provided with a bead (13).

6. Packing element according to one of Claims 1 to 5, **characterized in that** the bend of the at least one strip (21, 22, 23, 31, 34) is designed as a kink.

7. Packing element according to one of Claims 1 to 6, **characterized in that** the respective transverse portion (17, 18, 33) is planar or curved, in particular V-shaped or U-shaped.

8. Packing element according to one of Claims 1 to 7, **characterized in that** it has a grid-like structure.

9. Packing element according to one of Claims 1 to 8, **characterized in that** it has at least three strips (22, 21, 23; 34, 31, 34) in particular five strips (22, 21, 23, 21, 22).

10. Packing element according to one of Claims 1 to 9, **characterized in that** at least one of the outer strips (22) is bent in in the direction of the other outside of the packing element (1), particularly in the case of a packing element (1) with three strips or in the case of a packing element with five strips, both outer strips (22, 22) being bent in towards the middle of the packing element (1).

11. Packing element according to one of Claims 1 to 10, **characterized in that** the transverse portions form end portions (17, 18) of the packing element.

12. Packing element according to one of Claims 1 to 11, **characterized in that** the bent strips (21, 22, 23; 31, 34) do not touch one another.

## Revendications

1. Elément de garnissage (1) composé de métal, en particulier pour des colonnes d'échange de matière et/ou de chaleur, qui sont parcourues par un écoulement de gaz et/ou de liquide, dans lequel l'élément de garnissage (1) est produit à partir d'une plaque, et dans lequel il est prévu au moins une incision (30) dans la plaque pour la formation de deux bandes allongées (22, 21; 21, 23; 31, 34) entre des parties transversales (17, 18, 33) de la plaque, et les bandes sont courbées entre ces parties transversales hors du plan passant par les parties transversales, **caractérisé en ce qu'**au moins une ouverture (32) est formée entre les bandes courbées (22, 21; 21, 23; 31, 34), en regardant perpendiculairement au plan passant par les parties transversales (17, 18, 33), et au moins une bande (22, 21; 21, 23; 31, 34), par rapport à sa direction transversale, présente une section transversale profilée pour la formation de l'ouverture (32) et/ou présente un estampage latéral pour la formation de l'ouverture (32) et/ou les bandes (22, 21; 21, 23; 31, 34) sont disposées de façon inclinée l'une par rapport à l'autre, au moins dans des régions partielles, par rapport à leur direction transversale, pour la formation de l'ouverture (32).

2. Elément de garnissage selon la revendication 1, **caractérisé en ce qu'**au moins une bande (22, 21; 21, 23; 31, 34) présente une section transversale en forme de U ou de V, par rapport à sa direction transversale.

3. Elément de garnissage selon la revendication 1 ou 2, **caractérisé en ce qu'**au moins une bande (22, 21; 21, 23; 31, 34) présente des parties de bande (2, 3, 4, 5, 28) de section transversale différente, par rapport à sa direction longitudinale.

4. Elément de garnissage selon l'une quelconque des revendications 1 à 3, **caractérisé en ce qu'**au moins une bande (22, 21; 21, 23; 31, 34) est munie d'au moins un trou de passage (6, 7, 8), en particulier dans une région de plus grande section transversale.

5. Elément de garnissage selon la revendication 4, **caractérisé en ce que** le trou de passage (6, 7, 8) est muni d'un bourrelet (13).

6. Elément de garnissage selon l'une quelconque des revendications 1 à 5, **caractérisé en ce que** la courbure de ladite au moins une bande (21, 22, 23, 31, 34) est réalisée sous la forme d'un coude.

7. Elément de garnissage selon l'une quelconque des revendications 1 à 6, **caractérisé en ce que** la section transversale respective (17, 18, 33) est plane ou cintrée, en particulier en forme de V ou en forme de U.

8. Elément de garnissage selon l'une quelconque des revendications 1 à 7, **caractérisé en ce qu'**il présente une structure de type grille.

9. Elément de garnissage selon l'une quelconque des revendications 1 à 8, **caractérisé en ce qu'**il présente au moins trois bandes (22, 21, 23; 34, 31, 34), en particulier cinq bandes (22, 21, 23, 21, 22).

10. Elément de garnissage selon l'une quelconque des revendications 1 à 9, **caractérisé en ce qu'**au moins une des bandes extérieures (22) est incurvée en direction de l'autre côté extérieur de l'élément de garnissage (1), en particulier dans un élément de garnissage (1) avec trois bandes ou dans un élément de garnissage avec cinq bandes, les deux bandes extérieures (22, 22) sont incurvées vers le milieu de l'élément de garnissage (1).

11. Elément de garnissage selon l'une quelconque des revendications 1 à 10, **caractérisé en ce que** les parties transversales forment des parties d'extrémité (17, 18) de l'élément de garnissage.

12. Elément de garnissage selon l'une quelconque des revendications 1 à 11, **caractérisé en ce que** les bandes courbées (21, 22, 23; 31, 34) ne se touchent pas.
